# EUROPEAN PATENT APPLICATION

(11) **EP 0 874 033 A1**
(43) Date of publication of application: **28.10.1998**
(21) Application number: 97200020.2
(22) Date of filing: 06.01.1997
(51) Int. Cl.: C09J 5/02, B32B 31/24

(54) **Process for improving the adhesion between a polymer film and a polymer matrix**

(71) Applicant: DSM N.V., 6411 TE Heerlen (NL)
(72) Inventor: Avides Moreira, Antonio, 4150 Porto (PT); Magalhaes, Arminda Maria Leite, 6211 BG Maastricht (NL); Dijkstra, Krijn, 6137 JB Sittard (NL); Campos Mendes Teles, Ana Rita, 4710 Braga (PT)

(57) **Abstract**

The invention relates to a process for improving the adhesion between a polyolefine matrix and a polyether blockcopolymer film by means of a plasma treatment of the interface between the polyolefine and the polyether blockcopolymer and wherein during the plasma treatment the film and the matrix are in contact with each other and the electrical discharge passes through the film and the matrix.

A 10-fold increase of the adhesion between polypropylene and a polyether-ester blockcopolymer could be realized by a plasma treatment at atmospheric pressure in air.

## Description

The present invention relates to a process for improving the adhesion between polymer surfaces, more specifically to a process for improving the adhesion between a polymer film and a supporting polymer matrix, wherein the film consists of a polymer having polar groups and the matrix consists of a non-polar polyolefine or vice versa. The film and matrix may contain if necessary additives and fillers, for instance colourants, stabilisers, processing aids, flame retardant agents, talc, minerals and/or fibrous reinforcing materials. The proportion of these additives should be chosen so that the polymer forms a continuous phase and the interface between the film and matrix is mainly a polymer-polymer contact. However in most applications the film will contain only low amounts of additives.

More specifically the present invention relates to a film consisting mainly of at least one polyether block copolymer and a matrix consisting of a polyolefine. Known polyether block copolymers are for instance polyetherester block copolymers, polyetheramide block copolymers and polyurethanes containing polyether blocks.

These films find use in sheetings having the property of being waterrepellant but of being permeable for water vapour. Sheetings of this kind find application in a wide range of fields, for instance as surgical garment, diapers, sports and rain garment and in the building industry for instance as roofing material. In these applications optimal use of the water vapour permeability can be made if the films are very thin. However in that case mechanical strength of the single film is too low and use has to be made of a matrix that supports the film. Supporting matrices can be for instance woven and non woven fibrous materials. For instance in sports wear and rain coats the water repellant and water vapour permeable film is supported by a textile. The material of the textile for instance polyester is in most cases good compatible with the material of the film, for instance copolyetherester, and a strong permanent adhesion between the film and matrix can be obtained by for instance a sealing process.

However in many combinations of materials the material of the matrix and film are not compatible and at least one of the contacting surfaces has to be modified to make adhesion possible. These surface treatments can be given by chemical means for instance by applying a compatilizing compound, or using a sealant. Another in many cases very effective method exists of plasma modification of the surface of the matrix.

A general introduction on this technique can be found in Encyclopedia of Polymer Science and Engineering, Supplement Volume, in the chapter on Surface Modification, p. 674 and following, (1989) and the references mentioned therein. Depending upon the gaseous atmosphere in which the plasma treatment is given the polymer surface can by modified. The most simple plasma treatment is the corona discharge treatment in air of atmospheric pressure. The technique which is described in more detail in for instance T.appl. 65(8), 75-78 (1982) and Kunststoffberater 10, 31 (1987) is in essence a high-frequency electric discharge between two electrodes by which negative charges, i.e. electrons and ions, are transported with very high velocity, due to the imposed high-field strength, to the positive electrode, which in general supports the substrate of which the surface is to be modified. After the treatment the adhesion of the exposed polyolefine film surface is generally improved appreciably. However in the case of a polyolefin matrix and polyether block copolymer film no improvement of the adhesion could be obtained by the convential corona treatment of the polyolefin surface. Contrary to what was expected even a decrease of the adhesion was observed.

Very surprisingly the inventors have found however that an exceptional increase of the adhesion between the surfaces of a polyolefin and a polyether blockcopolymer can be obtained by a corona treatment if the two surfaces are in contact with each other during the corona treatment and the electrics discharge passes through film and matrix.

Preferably the polyether block copolymer film is situated furthest away from the positive electrode, so that the electric discharge passes first through the polyether blockcopolymer before reaching the polyolefin surface.

Another preferred condition is that the film and matrix are contacted under some pressure during the corona treatment. As the corona treatment is preferably performed as a continuous process, this pressure is very practically exerted by at least one cylinder roll.

The energy that is discharged may vary over a wide range and depends interalia on the thickness of the film and matrix, frequency of the discharges, and duration of the treatment. The average skilled person can easily determine the optimum conditions from case to case.

The treatment should anyhow be limited to such a time and energy density that no pinholes are made in the film.

The mechanism of the phenomena that lead to the unexpected improvement of the adhesion between the polyolefin matrix and polyether blockcopolymer film is not yet understood, but it will be clear for the person skilled in the art that the invention may be extended to any material combination having comparable properties as the polyether block copolymer and the polyolefine of the present description. Also the invention is not limited to a polyether blockcopolymer film and a polyolefin matrix but applies in general to any interface between a polyether blockcopolymer and a polyolefine.

The invention is now illustrated by some examples and comparative experiments. However, as outlined already earlier the invention is not limited thereto.

### Experimental

### Materials

Film of Arnitel EM400®, a polyetherester blockcopolymer, Shore D hardness of 40 and consisting essentially of polybutyleenterephtalate (40 wt.%) as hard segments and polytetrahydrofurane (60 wt.%) as soft segments, supplied by DSM, was made by sheet extrusion with a thickness of 12 µm, 25 µm, 50 µm and 100 µm.

Film of Polypropylene (standard homopolymer film grade) was made by sheet extrusion with a thickness of 25 µm.

Before the corona treatment both the Arnitel and the PP films were dried for 2h at 80°C.

### Corona treatment

The corona treatment was performed with a Softal generator type 3030 (maximum output voltage: 13 kV, output frequency: 16-30 kHz) in a standard configuration. The thickness of the Arnitel film and the speed of the treated film were systematically varied. The voltage remained constant during the experiments on the maximal setting of the corona device.

The corona treatment was performed in two different ways. In the first method, the PP film was corona treated and subsequently cured on the Arnitel film under different conditions. As a reference also untreated PP was cured on Arnitel under similar conditions.

In the second method a sandwich of the Polypropylene and the Arnitel film was corona treated in such a way that the corona was on the Arnitel side of the sandwich. With this sandwich no subsequent curing was performed after the corona treatment. During the treatment the two layers were pressed together by the weight of a cylinder roll.

### Curing experiments

Curing of the specimens was done on a HSG/ETK hot seal apparatus, supplied by Otto Brugger. The temperature of the two sealing plates was set at 200 °C for the Arnitel side and 100 °C at the PP side. The sealing pressure was kept constant at 0.8 MPa. The sealing time was varied between 10 and 99s. Also the time-gap between the corona treatment and the curing experiments was varied.

### Adhesion measurements

The test chosen to determine the strength of adhesion between Arnitel EM 400 and PP was the 180°C Peel Test according to ISO 8510-2. The test was performed in a tensile machine ZWICK 1445 with a speed of 25 mm/min and a load cell of 5N. The values of the peel test recorded are averaged over three samples. The dimensions of the assembly of Arnitel EM 400 and PP were: 100 x 20 mm (length x width) and 125, 75, 50, 37 µm of thickness.

### Results

In the Table 1 the peel strength of laminates of PP/Arnitel is represented. It can be seen that by corona treating the PP the interface strength of PP/Arnitel even decreases, compared to the reference. Variations in the corona and healing conditions do not essentially change the peel strength.

However, when a sandwich of PP/Arnitel is corona treated, surprisingly a dramatic (a factor 10) increase in the interface strength is obtained. To our knowledge this effect never was reported before. This increase in the peel strength of PP/Arnitel by this new method is only slightly dependent on the thickness of the Arnitel film (see Table 2). For the thinnest films tested here, the peel force exceeds the yield strength of the Arnitel, thus giving cohesive failure instead of interfacial failure.

**TABLE 1**

| Exp. | time gap [s] | film speed [mm/min] | healing time [s] | Arnitel thickness [µm] | G_{c/max} [J/m²] | δₙ₋ₗ | G_{c/av} J/m² | δₙ₋ₗ |
|---|---|---|---|---|---|---|---|---|
| ref. | - | - | - | 100 | 13.3 | 1.4 | 7.1 | 0.2 |
| 1 | 10 | 320 | 99 | 100 | 9.3 | 2.3 | 4.1 | 1.0 |
| 2 | 60 | 320 | 99 | 100 | 6.6 | 2.8 | 2.3 | 1.1 |
| 3 | 900 | 320 | 99 | 100 | 7.3 | 1.7 | 2.9 | 0.9 |
| 1 | 10 | 320 | 99 | 100 | 9.3 | 2.3 | 4.1 | 1.0 |
| 4 | 10 | 960 | 99 | 100 | 18.0 | 12.1 | 4.2 | 2.5 |
| 5 | 10 | 1600 | 99 | 100 | 139 | 5.2 | 2.8 | 0.5 |
| 6 | 10 | 320 | 1 | 100 | 5.1 | 0.2 | 2.7 | 0.8 |
| 7 | 10 | 320 | 10 | 100 | 5.0 | 0.1 | 3.1 | 0.2 |
| 8 | 10 | 320 | 30 | 100 | 9.8 | 2.6 | 4.1 | 0.6 |
| 9 | 10 | 320 | 60 | 100 | 13.8 | 12.6 | 4.0 | 2.1 |
| 1 | 10 | 320 | 99 | 100 | 9.3 | 2.3 | 4.1 | 1.0 |
| Different conditions of direct corona treatment of PP and subsequent curing on Arnitel, combined with results from peel test.: G_{c/max} maximum peel energy during peel test, G_{c/av} average peel energy during peel test. δₙ₋ₗ is the standard deviation of the peel energy. | | | | | | | | |

**TABLE 2**

| Exp. | Arnitel thickness [µm] | film speed [mm/min] | G_{c/max} [J/m²] | δₙ₋ₗ | G_{c/av} [J/m²] | δₙ₋ₗ |
|---|---|---|---|---|---|---|
| ref. | 100 | - | 13.3 | 1,4 | 7,1 | 0,2 |
| 10 | 12 | 320 | * | * | * | * |
| 11 | 25 | 320 | 76.4 | 35.0 | 55.2 | 36.1 |
| 12 | 50 | 320 | 81.7 | 56.6 | - | - |
| 13 | 100 | 320 | 121.7 | 81.4 | 19.8 | 14.4 |
| 13 | 100 | 320 | 121.7 | 81.4 | 19.8 | 14.4 |
| 14 | 100 | 960 | 53.4 | 17.8 | 18.9 | 7.9 |
| 15 | 100 | 1600 | 24.3 | 10.5 | 9.8 | 5.3 |
| 16 | 100 | 3200 | 11.5 | 3.8 | 5.8 | 0.4 |
| Effect of the Arnitel thickness and film speed on the peel strength of a sandwich of PP/Arnitel corona treated. G_{c/max} maximum peel energy during peel test, G_{c/av} average peel energy during peel test. δₙ₋ₗ is the standard deviation of the peel energy. * Cohesive failure in the Arnitel layer instead of interfacial failure. | | | | | | |

## Claims

1. Process for improving the adhesion between a film and a supporting matrix in which the film consists of at least one polyether blockcopolymer and the matrix consists of at least one polyolefin, optionally the blockcopolymer and polyolefine containing up to 80% by weight of one or more additives, in which process the interface between the film and matrix is given a plasma treatment and wherein during the plasma treatment the film and the matrix are in contact with each other and the electrical discharge passes through the film and the matrix.

2. Process according to claim 1 wherein during the plasma treatment the polyetherblock copolymer film is situated furthest away from the positive electrode.

3. Process according to any one of the claims 1 and 2 wherein the film and the matrix are contacted under pressure during the plasma treatment.

4. Process according to claim 3 wherein the pressure is exerted by at least one cylinder roll.

5. Multilayered object comprising at least one film of a polyether blockcopolymer and a matrix of a polyolefine wherein the adhesion of the film and the matrix is characterized by a maximum peel energy, measured according to ISO 8510-2, of at least 20 J/m² and an average peel energy of at least 10 J/m².

6. Multilayered object according to claim 5 wherein the maximum peel energy is at least 30 J/m² and the average peel energy at least 15 J/m².

7. Multilayered object according to any one of the claims 5 and 6 wherein the polyether blockcopolymer is chosen from the group consisting of thermoplastic polyetheresters, polyetheramides and polyetherurethanes.

8. Multilayered object according to claim 7 wherein the polyether blockcopolymer is a thermoplastic polyetherester blockcopolymer.
